# EUROPEAN PATENT SPECIFICATION

(11) **EP 2 995 161 B1**
(45) Date of publication and mention of the grant of the patent: **03.04.2019**
(21) Application number: 14738585.0
(22) Date of filing: 29.04.2014
(51) Int. Cl.: H04W 72/12, H04W 88/06

(54) **UPLINK SCHEDULING INFORMATION REPORTING APPARATUS AND SYSTEM SUPPORTING MULTI-CONNECTIVITY**
VORRICHTUNG UND SYSTEM ZUR ÜBERMITTLUNG VON UPLINK-PLANUNGSINFORMATIONEN ZUR UNTERSTÜTZUNG EINER MEHRFACH-KONNEKTIVITÄT
APPAREIL DE RAPPORT D'INFORMATIONS DE PLANIFICATION DE LIAISON MONTANTE ET SYSTÈME PRENANT EN CHARGE UNE CONNECTIVITÉ MULTIPLE

(30) Priority: 10.05.2013 CN 201310173404
(43) Date of publication of application: 16.03.2016
(73) Proprietor: Alcatel Lucent, 91620 Nozay (FR)
(72) Inventor: WEN, Pingping, Shanghai 201206 (CN); DENG, Yun, Shanghai 201206 (CN); WORRALL, Chandrika, Newbury Berkshire RG14 6SN (GB); YANG, Tao, Shanghai 201206 (CN)
(74) Representative: Novagraaf Technologies
(86) International application number: PCT/IB2014/000960
(87) International publication number: WO 2014/181177

(56) References cited:
- EP-A1- 2 398 273
- US-A1- 2012 140 743
- BROADCOM CORPORATION: "Architectures for dual connectivity", 3GPP DRAFT; UL-DL-WORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 6 April 2013 (2013-04-06), XP050699560, Retrieved from the Internet: URL:http://www.3gpp.org/ftp/tsg_ran/WG2_RL 2/TSGR2_81bis/Docs/ [retrieved on 2013-04-06]
- NTT DOCOMO ET AL: "Necessity of C-plane architecture enhancements for dual connectivity", 3GPP DRAFT; R2-131329_NECESSITY FOR C-PLANE ARCHITECTURE ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Chicago, USA; 20130415 - 20130419 5 April 2013 (2013-04-05), XP050699329, Retrieved from the Internet: URL:http://www.3gpp.org/ftp/tsg_ran/WG2_RL 2/TSGR2_81bis/Docs/ [retrieved on 2013-04-05]

## Description

### Technical Field

The present invention relates to the field of wireless communication technology, and more specifically, to an uplink scheduling information reporting technology supporting multi-connectivity.

### Background of the Invention

Due to capacity improvement and solving the coverage of blind points brought by low power nodes such as micro cells, pico cells, and femto cells, there are big interests on small cell deployments and enhancements. In 3GPP R12, one new Study Item "Small Cell Enhancements for E-UTRA and E-UTRAN - Higher-layer aspects" has been approved and one important point is to support the multi-connectivity (including dual connectivity) to macro and small cells. Furthermore scheduling is one critical function to allocate the resource to the user to achieve the desired QoS and system capacity. Scheduling information reporting including buffer status report (BSR) and Scheduling request (SR) is one important input factor for the Uplink (UL) scheduler to know how much data need to be transmitted for each Logic Channel Group (LCG). In current system, there is only serving node for the user, therefore the user only need to report the BSR and SR to one base station. To support multi-connectivity, the user needs to have two or more serving cells and a distributed scheduler at each of the serving cells if these cells are linked with non-ideal backhaul, therefore what values should be reported to which cell and How the value is reported to each cell should be determined.

The BSR procedure is used to provide the serving eNB with information about the amount of data available for transmission in the UL buffers of the user equipment (UE). The SR is used for requesting UL-SCH resources for new transmission. When there is no resource allocation to transmit the BSR, SR sending will be triggered. In current system, since there is only one serving node, although there are multiple serving cells in the Carrier Aggregation (CA) case which are, however, physically co-located, the BSR and SR sending procedure is relatively simple, e.g.:
-- There is only one node to get BSR and SR for scheduling;
-- The BSR procedure has only one set of trigger;
-- The UE shall transmit at most one Regular/Periodic BSR in a TTI (Transmission Time Interval);
-- If the UE is requested to transmit multiple MAC PDUs in a TTI, it may include a padding BSR in any of the MAC PDUs which do not contain a Regular/Periodic BSR.

Based on the above analysis, the existing mechanism of buffer status report and scheduling request cannot support multi-connectivity (including dual connectivity). Moreover, in the case of multi-connectivity (including dual-connectivity), due to the existence of two or more serving sells, if these serving cells are linked with non-ideal backhaul connection, then an independent distributed scheduler is further needed at each eNB. If more (two) cells support control plane and data plane splitting, i.e., the SRB (Signaling Radio Bearer) and DRB (Data Radio Bearer) splitting is supported between these more (two) cells, a user needs to report the BSR and SR to the more (two) cells, respectively. Therefore, in the case of multi-connectivity (including dual connectivity), what value to be reported and How to report when the user is transmitted to more than one cell simultaneously, especially with DRB splitting case should be solved.

US 2012/0140743 A1 discloses a method of managing carrier aggregation for a multi-radio access technology (RAT) Wireless transmitter/receiver unit (WTRU). The method may include: receiving, by the WRTU over a primary channel associated with a RAT of a first type, provisioning information for provisioning a supplementary channel associated with a RAT of a second type; establishing the supplementary channel associated with the RAT of the second type based on the received provisioning information.

EP 2 398 273 A1 discloses a method of handling buffer status report for a mobile device capable of UL MIMO and/or capable of receiving and/or transmitting on a plurality of component carriers in a wireless communication system.

3GPP TSG RAN WG2 Meeting #81bis; R2-130989; Chicago, USA, April 15th - 19th, 2013; Broadcom Corporation; Agenda Item: 7.2; Title: Architectures for dual connectivity discloses three schemes to implement dual connectivity and improve mobility, QoS and handle and exploit UL-DL power imbalance.

### Summary of the Invention

According to the present invention, an apparatus as set forth in claim 1 and a system as set forth in claim 5 are provided. Embodiments of the invention are claimed in the dependent claims.

One objective of the present invention is to provide uplink scheduling information reporting apparatus and system supporting multi-connectivity (including dual connectivity).

According to one aspect of the present disclosure, an uplink scheduling information reporting apparatus supporting multi-connectivity at a UE is provided, wherein the UE is connected to multiple eNBs, the apparatus comprising:
a configuration receiving module configured to receive trigger configuration information about buffer status report of a logical channel group that a corresponding radio bearer belongs to, and radio bearer configuration information and uplink resource configuration information respectively corresponding to each of the multiple eNBs, wherein the trigger configuration information is available for the UE to configure BSR trigger condition corresponding to each of the multiple eNBs;
a BSR report module configured to, when the BSR trigger condition of at least one of the multiple eNBs is satisfied, transmit to a corresponding eNB the buffer status report of the logical channel group that its corresponding radio bearer belongs to.

According to another aspect of the present disclosure, a facilitating uplink scheduling information reporting apparatus supporting multi-connectivity at a macro eNB is further provided, wherein a UE is connected to the macro eNB and multiple other eNBs, the apparatus comprising:
a first configuration sending module configured to transmit, to the UE, trigger configuration information about buffer status report of a logical channel group to which a data radio bearer corresponding to the macro eNB belongs, for the UE to configure a BSR trigger condition corresponding to the macro eNB;
a first BSR receiving module configured to receive, from the UE, the buffer status report when the BSR trigger condition is satisfied;
a first transmission determining module configured to determine amount of data transmitted by the macro eNB for the data radio bearer based on the buffer status report.

According to a further aspect of the present disclosure, a facilitating uplink scheduling information reporting apparatus supporting multi-connectivity at a small cell eNB is further provided, wherein a UE is connected to the small cell eNB and multiple other eNBs, the apparatus comprising:
a second configuration sending module configured to transmit, to the UE, trigger configuration information about buffer status report of a logical channel group to which a data radio bearer corresponding to the small cell eNB belongs, for the UE to configure a BSR trigger condition corresponding to the small cell eNB;
a second BSR receiving module configured to receive, from the UE, the buffer status report when the BSR trigger condition is satisfied;
a second transmission determining module configured to determine amount of data transmitted by the small cell eNB for the data radio bearer based on the buffer status report and historical scheduling information of the small cell.

According to a still further aspect of the present disclosure, A facilitating uplink scheduling information reporting apparatus supporting multi-connectivity at a small cell eNB is further provided, wherein a UE is connected to one or more small cell eNBs and one macro eNB, the small cell corresponding to the small cell eNB is located within a macro cell provided by the macro eNB, the apparatus comprising:
a third configuration sending module configured to transmit, to the UE, trigger configuration information about buffer status report of a logical channel group to which a data radio bearer corresponding to the small cell eNB belongs, for the UE to configure a BSR trigger condition corresponding to the small cell eNB;
a third BSR receiving module configured to receive, from the UE, the buffer status report when the BSR trigger condition is satisfied;
a third transmission receiving module configured to receive, from the macro eNB, decision information about amount of data transmitted by the small cell eNB for the data radio bearer as determined by the macro eNB for the small cell eNB.

In an example, a facilitating uplink scheduling information reporting apparatus supporting multi-connectivity at a small cell eNB is further provided, wherein a UE is connected to one or more small cell eNBs and one macro eNB, the small cell corresponding to the small cell eNB is located within a macro cell provided by the macro eNB, the apparatus comprising:
a fourth BSR receiving module configured to receive, from the macro eNB, the buffer status report, transmitted by the UE and forwarded by the macro eNB, of the logical channel group to which a data radio bearer corresponding to the small cell eNB belongs, and decision information about the amount of data transmitted by the small cell eNB for the data radio bearer as determined by the macro eNB for the small cell eNB.

According to one aspect of the present disclosure, an uplink scheduling information reporting system supporting multi-connectivity is further provided, wherein the system comprises the aforementioned uplink scheduling information reporting apparatus supporting multi-connectivity at a UE according to the one aspect of the present invention, the aforementioned facilitating uplink scheduling information reporting apparatus supporting multi-connectivity at a macro eNB according to the another aspect of the present invention, and one of the aforementioned facilitating uplink scheduling information reporting apparatuses supporting multi-connectivity at a small cell base station according to the further, the still further, and the yet further aspect of the present invention.

Compared with the prior art, the present invention provides an uplink scheduling information reporting mechanism supporting multi-connectivity (including dual-connectivity), wherein the scheduling information reporting includes buffer status report and scheduling request. Herein the reporting mechanism provides the serving eNB with information about data amount that can be transmitted in UL buffer of a UE, which may be applicable in cases of DRB splitting and DRB non-splitting, so as to support multi-connectivity (including dual-connectivity). Further, the macro cells and small cells in multi-connectivity (including dual-connectivity) to the UE are linked with non-ideal backhaul connection, and thus a distributed scheduler for the multiple cells is needed. Therefore, multi-connectivity (including dual-connectivity) enables macro cell to provide a better coverage of the control plane data and enables small cell to provide larger capacity.

### Brief Description of Figures

Through reading the following detailed depiction on the non-limiting embodiments with reference to the accompanying drawings, the other features, objectives, and advantages of the present invention will become clearer.
Fig. 1 shows a flowchart of a method for implementing uplink scheduling information reporting with cooperation between a UE 10, and a macro eNB 20 and a pico eNB 30 in dual-connectivity with the UE 10 according to one embodiment of the present invention;
Fig. 2 shows a schematic diagram of an application scenario according to one preferred embodiment of the present invention;
Fig. 3 shows a schematic diagram of an application scenario according to another preferred embodiment of the present invention;
Fig. 4 shows a schematic diagram of an application scenario according to a further preferred embodiment of the present invention;
Fig. 5 shows a schematic diagram of an apparatus at a UE 10 that is in dual-connectivity with a macro eNB 20 and a pico eNB 30 to cooperatively implement uplink scheduling information reporting according to another embodiment of the present invention.

Same or like reference numerals in the accompanying drawings indicate the same or corresponding components.

### Embodiments of the Invention

Hereinafter, the present invention will be further described in detail with reference to the accompanying drawings.

In the present invention, multi-connectivity means a UE is connected simultaneously to multiple eNBs which may all be macro eNBs, all be small cell eNBs, or a combination of both. For example, a UE is connected simultaneously to two macro eNBs, or the UE is connected simultaneously to a macro eNB and a small cell eNB. Further, there might not be an affiliation relationship between the small cell eNB and the macro eNB simultaneously connected to the UE. For example, the UE is connected simultaneously to a macro eNB and a small cell eNB, while the small cell corresponding to the small cell eNB is located within a macro cell provided by another macro eNB.

In the case of multi-connectivity, respective eNBs connected to the UE may transmit, to the UE, trigger configuration information about the buffer status report of the logical channel group to which a corresponding radio bearer belongs, radio bearer configuration information, and uplink resource configuration information, etc., respectively. Preferably, when the UE is connected to a macro eNB and a plurality of small cell eNBs belonged to the macro eNB, the macro eNB may determine, for the respective aforementioned small cell eNBs, their respective trigger configuration information about the buffer status report of the logical channel group to which the corresponding radio bearer belongs, and transmit the configuration information to the UE.

For the convenience of illustration, dual connectivity is mostly taken for example and maken illustration in this description, and those skilled in the art should understand that, such example(s) is only for the purpose of illustration of the present invention and should not be construed as any limitation to the present invention, and the multi-connectivity other than dual-connectivity is also applicable to the present invention and included in the protection scope of the present invention.

In the case of dual connectivity, a UE may be connected simultaneously to two base stations, e.g., an eNB corresponding to a macro cell (hereinafter referred to "macro eNB") and an eNB corresponding to a small cell within the macro cell, wherein the small cell can be a micro cell, a pico cell, a femto cell, etc. For the convenience of illustration, this description mostly takes a pico cell within the macro cell as an example, such that the dual-connectivity UE is further connected to the eNB corresponding to the pico cell (hereinafter referred to as "pico eNB").

Note that the above pico cell is only exemplary and should not be construed as any limitation to the present invention; other existing or future small cells, if applicable to the present invention, should be covered with the patent protection scope of the present invention.

Herein, for the case of DRB non-splitting transmission in two base stations, i.e., one DRB can only be transmitted in one base station thereof, the UE reports, to a corresponding base station, buffer status report of the LCG to which the DRB is mapped; for the case of DRB splitting transmission in two base stations, i.e., one DRB is transmitted by two base stations, both the macro eNB and the pico eNB need to obtain the buffer status report of the LCG to which the DRB is mapped, and transmit partial amount of data for the DRB, respectively.

However, the situation is different for control plane data. Since the small cell may have partial RRC function for local resource allocation, the SRB may be sent to macro cell and small cell, i.e., SRB splitting needs to be supported. Besides, under this situation, UE needs to differentiate which cell the SRB will be sent to and the buffer data amount of the SRB transmitted to the corresponding cell, and report the corresponding cell the buffer status report of the LCG to which the SRB belongs. In other words, the UE only reports the buffer status report of the LCG to the eNB which the logic channel or the radio bearer is allowed to transmit to.

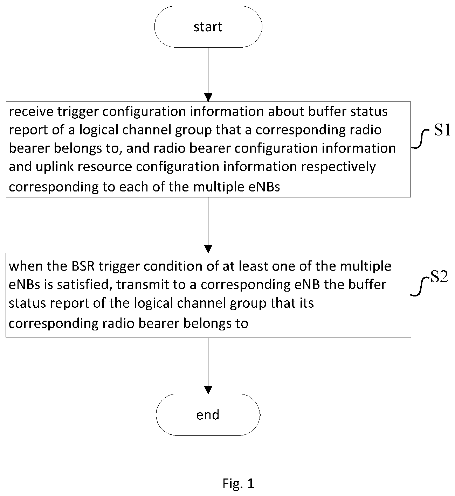

Fig. 1 is a flowchart of a method according to one embodiment of the present invention, which shows that a UE 10 cooperates with a macro eNB 20 and a pico eNB 30 in dual-connectivity therewith to implement the uplink scheduling information reporting.

Specifically, in step S1, the macro eNB 20 and the pico eNB 30 transmit, to the UE 10, trigger configuration information about buffer status report of the logical channel group to which their respective corresponding radio bearer belongs, radio bearer configuration information, and uplink resource configuration information, respectively; correspondingly, the UE 10 receives, from the macro eNB 20 and the pico eNB 30, their respective configuration information mentioned above. Here, the trigger configuration information includes BSR trigger configuration information corresponding to the macro eNB 20 and the pico eNB 30, respectively, for the UE to configure the corresponding BSR configuration conditions for the respective eNBs, e.g., the configuration information of the BSR trigger timers corresponding to the respective eNBs; the radio bearer configuration information includes radio bearer types that can be transmitted by respective eNBs; the uplink resource configuration information includes configuration information of uplink resources allocated by respective eNBs for the UE, e.g., PUCCH resource configuration information. Thus, for a UE supporting dual-connectivity, it needs to perform Individual MAC-MainConfig for the connected two cells.

In step S2, when a BSR trigger condition of at least one of the multiple eNBs to which the UE 10 is connected is satisfied, the UE 10 transmits, to the corresponding eNB, the buffer status report of the logical channel group to which its corresponding radio bearer belongs. For example, for the SRB buffer status report, the UE 10 needs to maintain a set of trigger procedure for the macro eNB 20 and the pico eNB 30, respectively, e.g., the periodic BSR-Timer and retxBSR-Timer. When the BSR trigger condition of a corresponding eNB is satisfied, e.g., the corresponding timer expires, the UE 10 reports, to the corresponding eNB, the BSR of the LCG that the corresponding SRB belongs to.

Here, report of the periodic BSR and regular BSR may conform to the existing rules. However, for a padding BSR report, if the UE 10 is requested to transmit multiple MAC PDUs to one eNB (e.g., the macro eNB 20 or the pico eNB 30) in a TTI, it may be included in any of the MAC PDUs which do not contain a Regular/Periodic BSR.

Further, in step S2, when a BSR trigger condition of at least one of the multiple eNBs to which the UE 10 is connected is satisfied and the corresponding eNB does not currently allocate uplink resource to the UE yet, the UE 10 transmits a scheduling request to the eNB to obtain the uplink resource for reporting the buffer status report to the eNB. That is, if there is no uplink resource currently allocated to transmit BSR, SR sending will be triggered. Likewise, there are also two sets of SR sending procedure for the two eNBs separately. Specifically, when a BSR trigger condition of the macro eNB 20 is satisfied, if there is no valid PUCCH resource configured by the macro eNB 20 for the SR within any TTI, the UE 10 initiates random access to the macro eNB 20. When a BSR trigger condition of a small cell eNB is satisfied, if there is no valid PUCCH resource configured by the small cell eNB for the SR within any TTI, the UE 10 initiates random access to the small cell eNB. Therefore, both eNBs should support PUCCH and random access.

For the case of DRB splitting, since one DRB can be transmitted by multiple eNBs, while the multiple eNBs are linked with non-ideal backhaul connection, each eNB needs an independent distributed scheduler. Therefore, its implementation is more complex and has many variations. Here, the multiple eNBs transmitting the DRB may be all or a part of the eNBs connected to the UE, and such eNBs are called transmitting eNBs, wherein each transmitting eNB may obtain the total BSR report of the DRB and determine itself the amount of data it can transmit. Further, when one of the transmitting eNB is a macro eNB, and the other transmitting eNBs are small cell eNBs belonged to the macro eNB, the macro eNB may determine, for the other transmitting eNBs, the amount of data that can be transmitted by respective the other transmitting eNBs for the RDB.

Hereinafter, some preferred embodiments will be illustrated with reference to the accompanying drawings, and the example will be taken with one DRB to be transmitted on two base stations, which two transmitting base stations are a macro eNB 20 and a pico eNB 30.

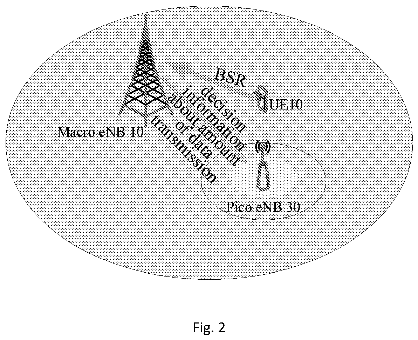

In one preferred embodiment of the present invention, with cooperative reference to Fig. 1 and Fig. 2, in step S1, the macro eNB 20 transmits, to the UE 10, trigger configuration information about the buffer status report of the logical channel group to which the data radio bearer corresponding to the macro eNB 20 belongs, for the UE 10 to configure its BSR trigger condition corresponding to the macro eNB 20; in step S2, when the BSR trigger condition of the macro eNB 20 is satisfied, the UE 10 transmits the buffer status report of the logical channel group to which the DRB belongs to the macro eNB 20 through MAC PDU. Here, based on the existing rules, the BSR may be triggered as periodic BSR, regular BSR, or padding BSR.

Afterwards, the macro eNB 20 uses its flow control function to determine the amount of data transmitted respectively by itself and the pico eNB 30 for the DRB, based on respective load and channel condition of itself and the pico eNB 30 etc in accordance with the buffer status report, and then provides the BSR and the decision information corresponding to the amount of data determined to be transmitted by the pico eNB 30 to the pico eNB 30 via the X2 interface. Preferably, the decision information may be included in the BSR. Here, the decision information includes that the amount of data transmitted by the pico eNB 30 or that the ratio of the amount of data transmitted by the pico eNB 30 over the buffer data amount in the DRB determined by the macro eNB 20. Correspondingly, the pico eNB 30 receives, from the macro eNB 20, the buffer status report forwarded by the macro eNB 20 and the decision information about the amount of data determined by the macro eNB 20 to be transmitted by the pico eNB 30 for the DRB, such that the pico eNB 30 allocates uplink resource to the UE 10.

In addition, due to there is delay from the UE sending the BSR to the macro eNB 20, in this duration, the UE is possible to be allocated resources and transmit data, therefore the macro eNB 20 may deduce the data transmission amount during this period and correspondingly reduce this part of amount of data from the buffer status report. Moreover, due to the uncertain latency of X2 interface, when the macro eNB 20 forwards the BSR transmitted by the UE to the pico eNB 30, the BSR sending time may also be provided along to the pico eNB30, wherein the BSR sending time may be the time when the UE reports the BSR, or the time when the macro eNB 20 forwards the BSR, which may be labeled as SFN+subframe number, for example. Correspondingly, the pico eNB 30 may also receive the BSR sending time from the macro eNB 20 to deduce the amount of data that has been transmitted by the UE 10, and allocate uplink resource to the UE based thereupon.

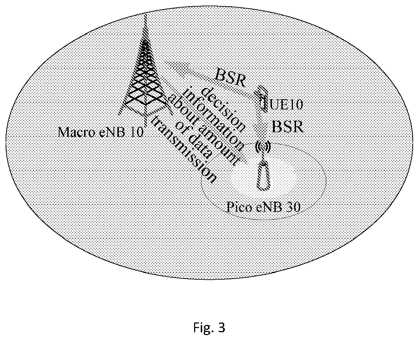

In another preferred embodiment of the present invention, with cooperative reference to Fig. 1 and Fig. 3, in step 1, the macro eNB 20 and the pico eNB 30 transmit, to the UE 10, trigger configuration information about buffer status report of the logical channel group to which the data radio bearer respectively corresponding to the macro eNB 20 and the pico eNB 30 belongs, respectively, for the UE 10 to configure the BSR trigger conditions corresponding to the macro eNB 20 and the pico eNB 30, respectively; in step S2, when the BSR trigger conditions of the macro eNB 20 and the pico eNB 30 are satisfied, the UE transmits the buffer status report of the logical channel group to which the DRB belongs to the macro eNB 20 and the pico eNB 30, respectively, so as to avoid untimely transmission of the X2 interface having a non-ideal backhaul link.

Afterwards, the macro eNB 20 uses its flow control function to determine the amount of data transmitted respectively by itself and the pico eNB 30, and further provides the decision information corresponding to the amount of data to the pico eNB 30 via the X2 interface. Here, the decision information includes the amount of data determined by the macro eNB 20 to be transmitted by the pico eNB 30 or the ratio that the amount of data transmitted by the pico eNB 30 over the buffer data amount of the DRB, which may be used to facilitate the pico eNB 30 to avoid over resource allocation for the UE 10. Further, considering the latency of the X2 interface, the decision information may be provided, along with its sending time, to the pico eNB 30, so as to avoid over resource allocation on the pico eNB for the UE 10.

Besides, since the uplink resource allocation is completely different in two eNBs, for the same BSR report, it is possible that the macro eNB 20 has uplink resource allocation to transmit the BSR, while the pico eNB 30 has no uplink resource allocation to transmit the BSR, so it is necessary to trigger a SR procedure to request the pico eNB 30 for corresponding uplink resource. Therefore, the UE 10 needs to maintain two sets of BSR trigger and SR trigger mechanisms for the two eNBs sepeately.

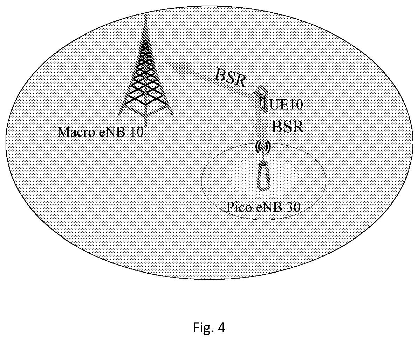

In another preferred embodiment of the present invention, with cooperative reference to Fig. 1 and Fig. 4, in step S1, the macro eNB 20 and the pico eNB 30 transmit, to the UE 10, trigger configuration information about buffer status report of the logical channel group to which the data radio bearer respectively corresponding to the macro eNB 20 and the pico eNB 30 belongs, respectively, for the UE 10 to configure the BSR trigger conditions corresponding to the macro eNB 20 and the pico eNB 30, respectively; in step S2, when the BSR trigger conditions of the macro eNB 20 and the pico eNB 30 are satisfied, the UE transmit the buffer status report of the logical channel group to which the DRB belongs to the macro eNB 20 and the pico eNB 30, respectively.

Afterwards, the macro eNB 20 and the pico eNB 30 determine, based on their respective historical scheduling information, their respective amount of data transmission; therefore, it is unnecessary to exchange information between the macro eNB 20 and the pico eNB 30. Here, the historical scheduling information includes historical scheduling result of the macro eNB 20 or the pico eNB 30 in their respective single-connectivity and/or multi-connectivity, e.g., the last transmitted data amount autonomously determined by the pico eNB 30 in the case of dual-connectivity with DRB splitting, or the last transmitted data amount determined by the macro eNB 20 for the pico eNB 30 in the case of dual-connectivity with DRB splitting.

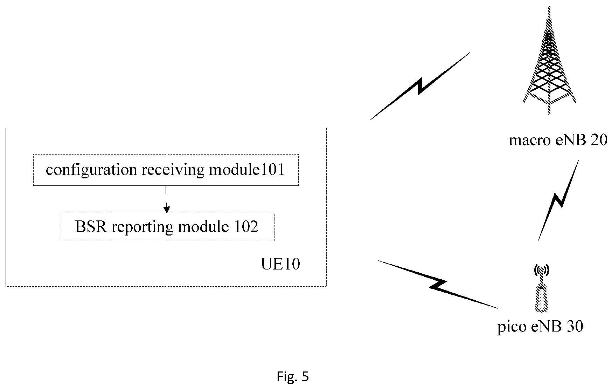

Fig. 5 is an apparatus diagram according to one embodiment of the present invention, which illustrates various modules of the UE 10 for cooperative implementation of uplink scheduling information reporting in dual-connectivity with a macro eNB 20 and a pico eNB 30. As shown in Fig. 5, the UE 10 includes a configuration module 101 and a BSR reporting module 102.

Specifically, the macro eNB 20 and the pico eNB 30 transmit, to the UE 10, trigger configuration information about buffer status report of the logical channel group to which their respective corresponding radio bearer belongs, radio bearer configuration information, and uplink resource configuration information, respectively; correspondingly, the configuration module 101 of the UE 10 receives, from the macro eNB 20 and the pico eNB 30, their respective configuration information mentioned above. Here, the trigger configuration information includes BSR trigger configuration information corresponding to the macro eNB 20 and the pico eNB 30, respectively, for the UE to configure the corresponding BSR configuration conditions for the respective eNBs, e.g., the configuration information of the BSR trigger timers corresponding to the respective eNBs; the radio bearer configuration information includes radio bearer types that can be transmitted by respective eNBs; the uplink resource configuration information includes configuration information of uplink resources allocated by respective eNBs for the UE, e.g., PUCCH resource configuration information. Thus, for a UE supporting dual-connectivity, it needs to perform Individual MAC-MainConfig for the connected two cells.
when a BSR trigger condition of at least one of the multiple eNBs to which the UE 10 is connected is satisfied, the BSR reporting module 102 of the UE 10 transmits, to the corresponding eNB, the buffer status report of the logical channel group to which its corresponding radio bearer belongs. For example, for the SRB buffer status report, the UE 10 needs to maintain a set of trigger procedure for the macro eNB 20 and the pico eNB 30, respectively, e.g., the periodic BSR-Timer and retxBSR-Timer. When the BSR trigger condition of a corresponding eNB is satisfied, e.g., the corresponding timer expires, the BSR reporting module 102 of the UE 10 reports, to the corresponding eNB, the BSR of the LCG that the corresponding SRB belongs to.

Here, report of the periodic BSR and regular BSR may conform to the existing rules. However, for a padding BSR report, if the UE 10 is requested to transmit multiple MAC PDUs to one eNB (e.g., the macro eNB 20 or the pico eNB 30) in a TTI, it may be included in any of the MAC PDUs which do not contain a Regular/Periodic BSR.

Moreover, the UE 10 may further include a SR sending module (not shown), when a BSR trigger condition of at least one of the multiple eNBs to which the UE 10 is connected is satisfied and the corresponding eNB does not currently allocate uplink resource to the UE yet, the SR sending module transmits a scheduling request to the eNB to obtain the uplink resource for reporting the buffer status report to the eNB. That is, if there is no uplink resource currently allocated to transmit BSR, SR sending will be triggered. Likewise, there are also two sets of SR sending procedure for the two eNBs separately. Specifically, when a BSR trigger condition of the macro eNB 20 is satisfied, if there is no valid PUCCH resource configured by the macro eNB 20 for the SR within any TTI, the SR sending module initiates random access to the macro eNB 20. When a BSR trigger condition of a small cell eNB is satisfied, if there is no valid PUCCH resource configured by the small cell eNB for the SR within any TTI, the SR sending module initiates random access to the small cell eNB. Therefore, both eNBs should support PUCCH and random access.

For the case of DRB splitting, since one DRB can be transmitted by multiple eNBs, while the multiple eNBs are linked with non-ideal backhaul connection, each eNB needs an independent distributed scheduler. Therefore, its implementation is more complex and has many variations. Here, the multiple eNBs transmitting the DRB may be all or a part of the eNBs connected to the UE, and such eNBs are called transmitting eNBs, wherein each transmitting eNB may obtain the total BSR report of the DRB and determine itself the amount of data it can transmit. Further, when one of the transmitting eNB is a macro eNB, and the other transmitting eNBs are small cell eNBs belonged to the macro eNB, the macro eNB may determine, for the other transmitting eNBs, the amount of data that can be transmitted by respective the other transmitting eNBs for the RDB.

Hereinafter, some preferred embodiments will be illustrated with reference to the accompanying drawings, and the example will be taken with one DRB to be transmitted on two base stations, which two transmitting base stations are a macro eNB 20 and a pico eNB 30.

In one preferred embodiment of the present invention, with cooperative reference to Fig. 2 and Fig. 5, a first configuration sending module (not shown) of the macro eNB 20 transmits, to the UE 10, trigger configuration information about the buffer status report of the logical channel group to which the data radio bearer corresponding to the macro eNB 20 belongs, for the UE 10 to configure its BSR trigger condition corresponding to the macro eNB 20; when the BSR trigger condition of the macro eNB 20 is satisfied, the BSR reporting module 102 of the UE 10 transmits the buffer status report of the logical channel group to which the DRB belongs to the macro eNB 20 through MAC PDU. Here, based on the existing rules, the BSR may be triggered as periodic BSR, regular BSR, or padding BSR. Correspondingly, a first BSR receiving module (not shown) of the macro eNB20 receive the buffer status report transmitted from the UE 10.

Afterwards, a first transmission determining module (not shown) of the macro eNB 20 uses its flow control function to determine the amount of data transmitted respectively by itself and the pico eNB 30 for the DRB, based on respective load and channel condition of itself and the pico eNB 30 etc in accordance with the buffer status report, and then provides the BSR and the decision information corresponding to the amount of data determined to be transmitted by the pico eNB 30 to the pico eNB 30 via the X2 interface. Preferably, the decision information may be included in the BSR. Here, the decision information includes that the amount of data transmitted by the pico eNB 30 or that the ratio of the amount of data transmitted by the pico eNB 30 over the buffer data amount in the DRB determined by the macro eNB 20. Correspondingly, a fourth BSR receiving module (not shown) of the pico eNB 30 receives, from the macro eNB 20, the buffer status report forwarded by the macro eNB 20 and the decision information about the amount of data determined by the macro eNB 20 to be transmitted by the pico eNB 30 for the DRB, such that the pico eNB 30 allocates uplink resource to the UE 10.

In addition, due to there is delay from the UE sending the BSR to the macro eNB 20, in this duration, the UE is possible to be allocated resources and transmit data, therefore the macro eNB 20 may deduce the data transmission amount during this period and correspondingly reduce this part of amount of data from the buffer status report. Moreover, due to the uncertain latency of X2 interface, when the first transmission determining module of the macro eNB 20 forwards the BSR transmitted by the UE to the pico eNB 30, the BSR sending time may also be provided along to the pico eNB30, wherein the BSR sending time may be the time when the UE reports the BSR, or the time when the macro eNB 20 forwards the BSR, which may be labeled as SFN+subframe number, for example. Correspondingly, the fourth BSR receiving module of the pico eNB 30 may also receive the BSR sending time from the macro eNB 20 to deduce the amount of data that has been transmitted by the UE 10, and allocate uplink resource to the UE based thereupon.

In another preferred embodiment of the present invention, with cooperative reference to Fig. 3 and Fig. 5, the first configuration sending module of the macro eNB 20 and a third configuration sending module (not shown) of the pico eNB 30 transmit, to the UE 10, trigger configuration information about buffer status report of the logical channel group to which the data radio bearer respectively corresponding to the macro eNB 20 and the pico eNB 30 belongs, respectively, for the UE 10 to configure the BSR trigger conditions corresponding to the macro eNB 20 and the pico eNB 30, respectively; when the BSR trigger conditions of the macro eNB 20 and the pico eNB 30 are satisfied, the BSR reporting module 102 of the UE transmits the buffer status report of the logical channel group to which the DRB belongs to the macro eNB 20 and the pico eNB 30, respectively, so as to avoid untimely transmission of the X2 interface having a non-ideal backhaul link. Correspondingly, the first BSR receiving module of the macro eNB 20 and a third BSR receiving module of the pico eNB 30 receive the BSR of the DBR from the UE 10, respectively.

Afterwards, the first transmission determining module of the macro eNB 20 uses its flow control function to determine the amount of data transmitted respectively by itself and the pico eNB 30, and further provides the decision information corresponding to the amount of data to the pico eNB 30 via the X2 interface. Correspondingly, a third transmission receiving module of the pico eNB 30 receives the decision information from the macro eNB 20. Here, the decision information includes the amount of data determined by the macro eNB 20 to be transmitted by the pico eNB 30 or the ratio that the amount of data transmitted by the pico eNB 30 over the buffer data amount of the DRB, which may be used to facilitate the pico eNB 30 to avoid over resource allocation for the UE 10. Further, considering the latency of the X2 interface, the decision information may be provided, along with its sending time, to the pico eNB 30, so as to avoid over resource allocation on the pico eNB for the UE 10.

Besides, since the uplink resource allocation is completely different in two eNBs, for the same BSR report, it is possible that the macro eNB 20 has uplink resource allocation to transmit the BSR, while the pico eNB 30 has no uplink resource allocation to transmit the BSR, so it is necessary to trigger a SR procedure to request the pico eNB 30 for corresponding uplink resource. Therefore, the UE 10 needs to maintain two sets of BSR trigger and SR trigger mechanisms for the two eNBs sepeately.

In another preferred embodiment of the present invention, with cooperative reference to Fig. 4 and Fig. 5, the first configuration sending module of the macro eNB 20 and a second configuration sending module (not shown) of the pico eNB 30 transmit, to the UE 10, trigger configuration information about buffer status report of the logical channel group to which the data radio bearer respectively corresponding to the macro eNB 20 and the pico eNB 30 belongs, respectively, for the UE 10 to configure the BSR trigger conditions corresponding to the macro eNB 20 and the pico eNB 30, respectively; when the BSR trigger conditions of the macro eNB 20 and the pico eNB 30 are satisfied, the BSR reporting module 102 of the UE 10 transmit the buffer status report of the logical channel group to which the DRB belongs to the macro eNB 20 and the pico eNB 30, respectively. Correspondingly, the first BSR receiving module of the macro eNB 20 and a second BSR receiving module (not shown) of the pico eNB 30 receive the BSR of the DBR from the UE 10, respectively.

Afterwards, the first transmission determining module of the macro eNB 20 and a second transmission determining module (not shown) of the pico eNB 30 determine, based on their respective historical scheduling information, their respective amount of data transmission; therefore, it is unnecessary to exchange information between the macro eNB 20 and the pico eNB 30. Here, the historical scheduling information includes historical scheduling result of the macro eNB 20 or the pico eNB 30 in their respective single-connectivity and/or multi-connectivity, e.g., the last transmitted data amount autonomously determined by the pico eNB 30 in the case of dual-connectivity with DRB splitting, or the last transmitted data amount determined by the macro eNB 20 for the pico eNB 30 in the case of dual-connectivity with DRB splitting.

It should be noted that the present invention may be implemented in software or a combination of software and hardware; for example, it may be implemented by an ASIC (Application Specific Integrated Circuit), a general-purpose computer, or any other similar hardware devices.

The software program of the present invention may be executed by a processor to implement the above steps or functions. Likewise, the software program of the present invention (including relevant data structure) may be stored in a computer readable recording medium, for example, a RAM memory, a magnetic or optical driver, or a floppy disk, and other similar devices. Besides, some steps or functions of the present invention may be implemented by hardware, for example, a circuit cooperating with a processor to execute various functions or steps.

Additionally, a portion of the present invention may be applied as a computer program product, for example, a computer program instruction, which, may invoke or provide a method and/or technical solution according to the present invention through operations of the computer when executed by the computer. Further, the program instruction invoking the method of the present invention may be stored in a fixed or mobile recording medium, and/or transmitted through broadcast or data flow in other signal bearer media, and/or stored in a working memory of a computer device which operates based on the program instruction. Here, one embodiment according to the present invention comprises an apparatus comprising a memory for storing a computer program instruction and a processor for executing the program instruction, wherein when the computer program instruction is executed by the processor, the apparatus is triggered to run the methods and/or technical solutions according to a plurality of embodiments of the present invention.

To those skilled in the art, it is apparent that the present invention is not limited to the details of the above exemplary embodiments, and the present invention may be implemented with other embodiments without departing from the basic features of the present invention. Thus, in any way, the embodiments should be regarded as exemplary, not limitative; the scope of the present invention is limited by the appended claims instead of the above description, and all variations intended to fall into the meaning and scope of equivalent elements of the claims should be covered within the present invention. No reference signs in the claims should be regarded as limiting of the involved claims. Besides, it is apparent that the term "comprise" does not exclude other units or steps, and singularity does not exclude plurality. A plurality of units or modules stated in a system claim may also be implemented by a single unit or module through software or hardware. Terms such as the first and the second are used to indicate names, but do not indicate any particular sequence.

## Claims

1. An uplink scheduling information reporting apparatus supporting multi-connectivity at a UE (10), wherein the UE (10) is connected to multiple eNBs (20, 30), the apparatus **characterized by**:
a configuration receiving module (101) configured to receive trigger configuration information about butter status report of a logical channel group that a corresponding radio bearer belongs to, and radio bearer configuration information and uplink resource configuration information respectively corresponding to each of the multiple eNBs, wherein the trigger configuration information is available for the UE to configure BSR trigger condition corresponding to each of the multiple eNBs;
a BSR report module (102) configured to, when the BSR trigger condition of at least one of the multiple eNBs is satisfied, transmit to a corresponding eNB the butter status report of the logical channel group that its corresponding radio bearer belongs to;
wherein the radio bearer includes data radio bearer, which data radio bearer is transmitted through at least two of the multiple eNBs (20, 30), which at least two eNBs for transmitting become transmitting eNBs, in which one transmitting eNB is a macro eNB (20), and other transmitting eNB(s) is a small cell eNB (30), whose corresponding small cell is located within a macro cell provided by the macro eNB (20), the BSR reporting module is further configured to:
- when the BSR trigger condition of the macro eNB (20) is satisfied, transmit the buffer status report of the logical channel group to which the data radio bearer belongs to the macro eNB (20), such that the macro eNB (20) determines respective amounts of data to be transmitted through itself and the other transmitting eNB(s) (30), respectively, and further the buffer status report and decision information corresponding to the amounts of data is provided by the macro eNB (20) to the corresponding other transmitting eNB(s) (30), or
- when the BSR trigger conditions of the transmitting eNB are satisfied, transmit the buffer status report of the logical channel group to which the data radio bearer belongs to each of the transmitting eNBs, such that the macro eNB (20) determines respective amounts of data to be transmitted through itself and the other transmitting eNB(s), and further the macro eNB (20) provides decision information corresponding to the amounts of data to corresponding other transmitting eNB(s).

2. The apparatus according to claim 1, wherein the UE (10) is connected to one macro eNB (20) and a small cell eNB (30).

3. The apparatus according to claim 1 or 2, further comprising:
a SR sending module configured to, when the BSR trigger condition of at least one of the multiple eNBs (20, 30) is satisfied and the corresponding eNB does not allocate uplink resource to the UE (10) yet, send a scheduling request to the eNB (20, 30), so as to obtain uplink resource for reporting the butter status report to the eNB (20, 30).

4. The apparatus according to any one of claims 1 to 3, wherein the radio bearer further includes signaling radio bearer, which signaling radio bearer is transmitted by the multiple eNBs (20, 30), the BSR reporting module is further configured to:
- when the BSR trigger condition of at least one of the multiple eNBs (20, 30) is satisfied, determine amount of buffer data of signaling radio bearer transmitted to the corresponding eNB (20, 30), and transmit the butter status report of the logical channel group to which the signaling radio bearer belongs to the corresponding eNB (20, 30).

5. An uplink scheduling information system supporting multi-connectivity comprising: a facilitating uplink scheduling information reporting apparatus supporting multi-connectivity at a macro eNB (20), wherein a UE (10) is connected to the macro eNB (20) and to at least one other eNB (30), and a facilitating uplink scheduling information reporting apparatus supporting multi-connectivity at a first small cell eNB (30), wherein the UE (10) is connected to one or more small cell eNBs (30) and to the macro eNB (20), **characterized in that** the small cell corresponding to the first small cell eNB (30) is located within a macro cell provided by the macro eNB (20),
the facilitating uplink scheduling information reporting apparatus supporting multi-connectivity at the macro eNB (20), comprising:
a first configuration sending module configured to transmit, to the UE (10), trigger configuration information about buffer status report of a logical channel group to which a data radio bearer corresponding to the macro eNB (20) belongs, for the UE (10) to configure a BSR trigger condition corresponding to the macro eNB (20);
a first BSR receiving module configured to receive, from the UE (10), the buffer status report when the BSR trigger condition is satisfied;
a first transmission determining module configured to determine amount of data transmitted by the macro eNB (20) for the data radio bearer based on the buffer status report;
wherein the at least one other eNB (30) is at least one small cell eNB including the first small cell eNB, whose corresponding small cells are located within a macro cell provided by the macro eNB (20);
wherein the first transmission determining module is configured to:
- determine amount of data transmitted by the at least one other eNB (30) for the data radio bearer based on the buffer status report;
- send decision information corresponding to the amount of data for transmission as determined for the at least one eNB (30) to the at least one other eNB (30);
and the facilitating uplink scheduling information reporting apparatus supporting multi- connectivity at the first small cell eNB (30), comprising
a configuration sending module configured to transmit to the UE (10) trigger configuration information about buffer status report of a logical channel group to which a data radio bearer corresponding to the first small cell eNB (30) belongs for the UE (10) to configure a BSR trigger condition corresponding to the first small cell eNB (30):
a BSR receiving module configured to receive from the UE (10) the buffer status report when the BSR trigger condition is satisfied;
a transmission receiving module configured to receive from the macro eNB (20) decision information about the amount of data to be transmitted through the first small cell eNB (30) for the data radio bearer as determined by the macro eNB (20) for the first small cell eNB (30).

6. An uplink scheduling information reporting system supporting multi-connectivity, wherein the system comprises the uplink scheduling information reporting apparatus supporting multi-connectivity at a UE (10) according to any one of claims 1 to 4 and the an uplink scheduling information system supporting multi-connectivity according to claim 5.

## Patentansprüche

1. Uplink-Planungsinformationsmeldeeinrichtung, die eine Multikonnektivität bei einem UE (10) unterstützt, wobei das UE (10) mit mehreren eNBs (20, 30) verbunden ist, wobei die Einrichtung **gekennzeichnet ist durch**:
ein Konfigurationsempfangsmodul (101), das zum Empfangen von Auslöserkonfigurationsinformationen über einen Pufferstatusbericht einer Logikkanalgruppe, zu dem ein entsprechender Funkträger gehört, und von Funkträgerkonfigurationsinformationen und Uplink-Ressourcenkonfigurationsinformationen konfiguriert ist, die jeweils zu jedem der mehreren eNBs gehören, wobei die Auslöserinformationen für das UE zum Konfigurieren einer BSR-Auslöserbedingung entsprechend jedem der mehreren eNBs verfügbar sind;
ein BSR-Meldemodul (102), das zum Übertragen, wenn die BSR-Auslöserbedingung wenigstens eines der mehreren eNBs erfüllt wird, des Pufferstatusberichts der Logikkanalgruppe, zu der sein entsprechender Funkträger gehört, an einen entsprechenden eNB konfiguriert ist;
wobei der Funkträger einen Datenfunkträger beinhaltet, wobei der Datenfunkträger **durch** wenigstens zwei der mehreren eNBs (20, 30) übertragen wird, wobei wenigstens zwei eNBs zum Übertragen übertragende eNBs werden, wobei ein übertragender eNB ein Makro-eNB (20) ist und der (die) andere(n) übertragende(n) eNB(s) ein Kleinzellen-eNB (30) ist, dessen entsprechende Kleinzelle sich innerhalb einer Makrozelle befindet, die **durch** den Makro-eNB (20) bereitgestellt wird, wobei das BSR-Meldemodul ferner zu Folgendem konfiguriert ist:
- wenn die BSR-Auslöserbedingung des Makro-eNB (20) erfüllt ist, Übertragen des Pufferstatusberichts der Logikkanalgruppe, zu der der Funkträger gehört, an den Makro-eNB (20), so dass der Makro-eNB (20) jeweilige Mengen an Daten, die **durch** ihn selbst bzw. (einen) andere(n) übertragende(n) eNB(s) (30) zu übertragen sind, bestimmt und ferner der Pufferstatusbericht und Entscheidungsinformationen, die den Mengen an Daten entsprechen, **durch** den Makro-eNB (20) an den (die) entsprechenden anderen übertragenden eNBs(s) (30) geliefert werden, oder
- wenn die BSR-Auslöserbedingung des übertragenden eNB erfüllt ist, Übertragen des Pufferstatusberichts an die Logikkanalgruppe, zu der der Datenfunkträger gehört, an jeden der übertragenden eNBs, so dass der Makro-eNB (20) jeweilige Mengen an Daten, die **durch** ihn selbst und den (die) anderen übertragenden eNB(s) zu übertragen sind, bestimmt und ferner der Makro-eNB (20) Entscheidungsinformationen, die den Mengen an Daten entsprechen, an (einen) entsprechende(n) andere(n) übertragende(n) eNB(s) liefert.

2. Einrichtung nach Anspruch 1, wobei das UE (10) mit einem Makro-eNB (20) und einem Kleinzellen-eNB (30) verbunden ist.

3. Einrichtung nach Anspruch 1 oder 2, die ferner Folgendes umfasst:
ein SR-Sendemodul, das zum Senden, wenn die BSR-Auslöserbedingung von wenigstens einem der mehreren eNBs (20, 30) erfüllt ist und der entsprechende eNB dem UE (10) noch keine Uplink-Ressource zugewiesen hat, einer Planungsanforderung an den eNB (20, 30) konfiguriert ist, so dass eine Uplink-Ressource zum Melden des Pufferstatusberichts an den eNB (20, 30) erhalten wird.

4. Einrichtung nach einem der Ansprüche 1 bis 3, wobei der Funkträger ferner einen Signalisierungsfunkträger beinhaltet, wobei der Signalisierungsfunkträger durch mehrere eNBs (20, 30) übertragen wird, wobei das BSR-Meldemodul ferner zu Folgendem konfiguriert ist:
- wenn die BSR-Auslöserbedingung von wenigstens einem der mehreren eNBs (20, 30) erfüllt ist, bestimmen einer Menge an Pufferdaten eines Signalisierungsfunkträgers, der an den entsprechenden eNB (20, 30) übertragen wird, und Übertragen des Pufferstatusberichts der Logikkanalgruppe, zu der der Signalisierungsfunkträger gehört, an den entsprechenden eNB (20, 30).

5. Uplink-Planungsinformationssystem, das Multikonnektivität unterstützt und Folgendes umfasst:
eine Einrichtung zum Ermöglichen von Melden von Uplink-Planungsinformationen, die Multikonnektivität an einem Makro-eNB (20) unterstützt, wobei ein UE (10) mit dem Makro-eNB (20) und wenigstens einem anderen eNB (30) verbunden ist, eine Einrichtung zum Ermöglichen von Melden von Uplink-Planungsinformationen, die eine Multikonnektivität bei einem Kleinzellen-eNB (30) unterstützt, wobei das UE (10) mit einem oder mehreren Kleinzellen-eNBs (30) und mit dem Makro-eNB (20) verbunden ist, **dadurch gekennzeichnet, dass** sich die Kleinzelle, die dem ersten Kleinzellen-eNB (30) entspricht, innerhalb einer Makrozelle befindet, die durch den Makro-eNB (20) bereitgestellt wird,
wobei die Einrichtung zum Ermöglichen von Melden von Uplink-Planungsinformationen, die Multikonnektivität an dem Makro-eNB (20) unterstützt, Folgendes umfasst:
ein erstes Konfigurationssendemodul, das zum Übertragen, von Auslöserkonfigurationsinformationen über einen Pufferstatusbericht einer Logikkanalgruppe, zu der ein Datenfunkträger gehört, der dem Makro-eNB (20) entspricht, an das UE (10), damit das UE (10) eine BSR-Auslöserbedingung entsprechend dem Makro-eNB (20) konfiguriert;
ein erstes BSR-Empfangsmodul, das zum Empfangen des Pufferstatusberichts von dem UE (10) konfiguriert ist, wenn die BSR-Auslöserbedingung erfüllt ist;
ein erstes Übertragungsbestimmungsmodul, das zum Bestimmen einer Menge an Daten, die durch den Makro-eNB (20) übertragen wird, für den Datenfunkträger basierend auf dem Pufferstatusbericht konfiguriert ist;
wobei der wenigstens eine andere eNB (30) wenigstens ein Kleinzellen-eNB einschließlich des ersten Kleinzellen-eNB ist, dessen entsprechende Kleinzellen sich innerhalb einer Makrozelle befinden, die durch den Makro-eNB (20) bereitgestellt wird;
wobei das erste Übertragungsbestimmungsmodul zu Folgendem konfiguriert ist:
- Bestimmen einer Menge an Daten, die durch den wenigstens einen anderen eNB (30) übertragen werden, für den Datenfunkträger basierend auf dem Pufferstatusbericht;
- Senden von Entscheidungsinformationen, die der Menge an Daten zur Übertragung entsprechen, wie für den wenigstens einen anderen eNB (30) bestimmt, an den wenigstens einen anderen eNB (30); und wobei die Einrichtung zum Ermöglichen von Melden von Uplink-Planungsinformationen, die Multikonnektivität bei dem Kleinzellen-eNB (30) unterstützt, Folgendes umfasst:
ein Konfigurationssendemodul, das zum Übertragen von Auslöserkonfigurationsinformationen über einen Pufferstatusbericht einer Logikkanalgruppe, zu der ein Datenfunkträger gehört, der dem ersten Kleinzellen-eNB (30) entspricht, an das UE (10), damit das UE (10) eine BSR-Auslöserbedingung entsprechend dem ersten Kleinzellen-eNB (30) konfiguriert;
ein BSR-Empfangsmodul, das zum Empfangen des Pufferstatusberichts von dem UE (10) konfiguriert ist, wenn die BSR-Auslöserbedingung erfüllt ist;
ein Übertragungsempfangsmodul, das zum Empfangen von Entscheidungsinformationen über die Menge an Daten, die durch den ersten Kleinzellen-eNB (30) zu übertragen sind, für den Funkradioträger, wie durch den Makro-eNB (20) für den ersten Kleinzellen-eNB (30) bestimmt, von dem Makro-eNB (20) konfiguriert ist.

6. Uplink-Planungsinformationsmeldesystem, das Multikonnektivität unterstützt, wobei das System die Uplink-Planungsinformationsmeldeeinrichtung, die Multikonnektivität bei einem UE (10) unterstützt, nach einem der Ansprüche 1 bis 4 und ein Uplink-Planungsinformationssystem, das Multikonnektivität unterstützt, nach Anspruch 5 umfasst.

## Revendications

1. Appareil de signalement d'informations de planification d'une liaison montante prenant en charge la connectivité multiple au niveau d'un équipement d'utilisateur UE (10), dans lequel l'UE (10) est connecté à de multiples eNB (20, 30), l'appareil étant **caractérisé par** :
un module de réception de configuration (101) configuré pour recevoir des informations de configuration d'un déclencheur concernant le rapport sur l'état des mémoires temporaires BSR (Buffer Status Report) d'un groupe de canaux logiques auquel une porteuse radio correspondante appartient, et des informations de configuration de la porteuse radio et des informations de configuration de ressources de la liaison montante correspondant respectivement à chacun des multiples eNB, dans lequel les informations de configuration du déclencheur sont disponibles pour que l'UE puisse configurer une condition de déclenchement BSR correspondant à chacun des multiples eNB ;
un module de signalement BSR (102) configuré pour, lorsque la condition de déclenchement BSR d'au moins un des multiples eNB est satisfaite, transmettre à un eNB correspondant le rapport sur l'état des mémoires temporaires du groupe de canaux logiques auquel sa porteuse radio correspondante appartient ;
dans lequel la porteuse radio comprend une porteuse radio de données, porteuse qui est transmise par au moins deux des multiples eNB (20, 30), dont au moins deux eNB pour l'émission deviennent des eNB émetteurs, dans lequel un eNB émetteur est un macro eNB (20), et un autre ou d'autres eNB émetteurs sont un eNB à petite cellule (30), dont la petite cellule correspondante est située dans une macro cellule fournie par le macro eNB (20), et le module de signalement BSR est en outre configuré pour :
- lorsque la condition de déclenchement BSR du macro eNB (20) est satisfaite, transmettre au macro eNB (20) le rapport sur l'état des mémoires temporaires du groupe de canaux logiques auquel la porteuse radio de données appartient, de sorte que le macro eNB (20) détermine respectivement les quantités de données à transmettre par lui-même et par l'autre ou les autres eNB (30) émetteurs, et en outre, le rapport sur l'état des mémoires temporaires et les informations de décision correspondant aux quantités de données sont fournis par le macro eNB (20) à l'autre ou aux autres eNB (30) émetteurs correspondants, ou
- lorsque les conditions de déclenchement BSR de l'eNB émetteur sont satisfaites, transmettre le rapport sur l'état des mémoires temporaires du groupe de canaux logiques auquel la porteuse radio appartient à chacun des eNB émetteurs, de telle sorte que le macro eNB (20) détermine les quantités respectives de données à transmettre par lui-même et par l'autre ou les autres eNB émetteurs, et que le macro eNB (20) fournisse des informations de décision correspondant aux quantités de données à l'autre ou aux autres eNB émetteurs correspondants.

2. Appareil selon la revendication 1, dans lequel l'UE (10) est connecté à un macro eNB (20) et à un eNB à petite cellule (30).

3. Appareil selon la revendication 1 ou 2, comprenant en outre :
un module d'envoi SR configuré pour, lorsque la condition de déclenchement BSR d'au moins un des multiples eNB (20, 30) est satisfaite et que l'eNB correspondant n'affecte pas encore de ressources de la liaison montante à l'UE (10), envoyer une demande de planification à l'eNB (20, 30), afin d'obtenir des ressources sur la liaison montante pour signaler le rapport sur l'état des mémoires temporaires à l'eNB (20, 30).

4. Appareil selon l'une quelconque des revendications 1 à 3, dans lequel la porteuse radio comprend en outre une porteuse radio de signalisation, porteuse qui est transmise par les multiples eNB (20, 30), le module de signalement BSR étant en outre configuré pour :
- lorsque la condition de déclenchement BSR d'au moins un des multiples eNB (20, 30) est satisfaite, déterminer la quantité de données des mémoires temporaires de la porteuse radio de signalisation transmise à l'eNB correspondant (20, 30), et transmettre à l'eNB correspondant (20, 30) le rapport sur l'état des mémoires temporaires du groupe de canaux logiques auquel la porteuse radio de signalisation appartient.

5. Système d'information de planification de liaison montante prenant en charge la connectivité multiple comprenant :
un appareil pour faciliter le signalement d'informations de planification d'une liaison montante prenant en charge la connectivité multiple au niveau d'un macro eNB (20), dans lequel un UE (10) est connecté au macro eNB (20) et à au moins un autre eNB (30), et un appareil de signalisation d'informations de planification de liaison montante facilitant la connectivité multiple au niveau d'un premier eNB à petite cellule (30), dans lequel l'UE (10) est connecté à un ou plusieurs eNB à petite cellule (30) et au macro eNB (20), **caractérisé en ce que** la petite cellule correspondant au premier eNB à petite cellule (30) est située dans une macro cellule fournie par le macro eNB (20),
l'appareil pour faciliter le signalement d'informations de planification d'une liaison montante prenant en charge la connectivité multiple au niveau du macro eNB (20) comprenant :
un premier module d'envoi de configuration configuré pour transmettre à l'UE (10) des informations de configuration de déclenchement concernant le rapport sur l'état des mémoires temporaires d'un groupe de canaux logiques auquel appartient une porteuse radio de données correspondant au macro eNB (20), afin que l'UE (10) puisse configurer une condition de déclenchement BSR correspondant au macro eNB (20) ;
un premier module de réception BSR configuré pour recevoir, à partir de l'UE (10), le rapport sur l'état des mémoires temporaires lorsque la condition de déclenchement BSR est satisfaite ;
un premier module de détermination de la transmission configuré pour déterminer la quantité de données transmise par le macro eNB (20) pour la porteuse radio de données sur la base du rapport sur l'état des mémoires temporaires ;
dans lequel le ou les autres eNB (30) comprennent au moins un eNB à petite cellule incluant le premier eNB à petite cellule, dont les petites cellules correspondantes sont situées dans une macro cellule fournie par le macro eNB (20) ;
dans lequel le premier module de détermination de la transmission est configuré pour :
- déterminer la quantité de données transmises par le ou les autres eNB (30) pour la porteuse radio de données sur la base du rapport sur l'état des mémoires temporaires ;
- envoyer des informations de décision correspondant à la quantité de données à transmettre, telle que déterminée pour le ou les autres eNB (30), au ou aux autres eNB (30) ;
et l'appareil facilitant le signalement d'informations de planification de la liaison montante prenant en charge la connectivité multiple au niveau du premier eNB à petite cellule (30) comprenant
un module d'envoi de configuration configuré pour transmettre à l'UE (10) des informations de configuration de déclenchement concernant le rapport sur l'état des mémoires temporaires d'un groupe de canaux logiques auquel une porteuse radio de données correspondant au premier eNB à petite cellule (30) appartient à l'UE (10) pour configurer une condition de déclenchement BSR correspondant au premier eNB à petite cellule (30) ;
un module de réception BSR configuré pour recevoir, à partir de l'UE (10), le rapport sur l'état des mémoires temporaires lorsque la condition de déclenchement de la BSR est satisfaite ;
un module de réception de transmission configuré pour recevoir du macro eNB (20) des informations de décision concernant la quantité de données à transmettre par le biais du premier eNB à petite cellule (30) pour la porteuse radio de données, telle que déterminée par le macro eNB (20) pour le premier eNB à petite cellule (30).

6. Système de signalement d'informations de planification de liaison montante prenant en charge la connectivité multiple, dans lequel le système comprend l'appareil de signalement d'informations de planification de la liaison montante prenant en charge la connectivité multiple au niveau d'un UE (10) selon l'une quelconque des revendications 1 à 4, et le système d'informations de planification de la liaison montante prenant en charge la connectivité multiple selon la revendication 5.
